# EUROPÄISCHE PATENTSCHRIFT

(11) **EP 3 424 129 B1**
(45) Veröffentlichungstag und Bekanntmachung des Hinweises auf die Patenterteilung: **19.05.2021**
(21) Anmeldenummer: 17700167.4
(22) Anmeldetag: 09.01.2017
(51) Int. Cl.: H02K 1/16, H02K 17/16, H02K 17/20

(54) **ASYNCHRONMASCHINE**
ASYNCHRONOUS MACHINE
MACHINE ASYNCHRONE

(30) Priorität: 04.03.2016 DE 102016203568
(43) Veröffentlichungstag der Anmeldung: 09.01.2019
(73) Patentinhaber: Robert Bosch GmbH, 70442 Stuttgart (DE)
(72) Erfinder: BRUNE, Andre, 30419 Hannover (DE); RUIZ DE LARRAMENDI, Miguel, 71638 Ludwigsburg (DE)
(86) Internationale Anmeldenummer: PCT/EP2017/050302
(87) Internationale Veröffentlichungsnummer: WO 2017/148601

(56) Entgegenhaltungen:
- CN-A- 102 332 760
- US-A- 4 409 507
- US-A- 4 831 301
- US-A1- 2010 026 008
- US-A1- 2014 319 957
- US-A1- 2015 381 099

## Beschreibung

### Stand der Technik

Die Erfindung betrifft eine Asynchronmaschine, insbesondere für die Verwendung in Elektrofahrzeugen oder Hybridfahrzeugen, mit den Merkmalen des Oberbegriffs des unabhängigen Anspruchs 1.

In vielen Bereichen der Technik, beispielsweise für Elektro- oder Hybridfahrzeuge oder für Züge, werden Asynchronmaschinen verwendet. Die Asynchronmaschinen können dabei entweder als Motor oder als Generator wirken.

Asynchronmaschinen, auch als Induktionsmaschinen bezeichnet, weisen als wesentliche Baukomponenten einen Stator und einen Rotor auf. Ähnlich wie bei anderen elektrischen Maschinen sind im Stator Wicklungen untergebracht, durch die im Stator ein drehendes magnetisches Feld erzeugt wird, welches mit der Synchrondrehzahl entlang des Bohrungsumfangs umläuft. Der Rotor kann Stäbe umfassen, welche durch zwei Kurzschlussringe leitfähig zu einem Käfig verbunden sind. Durch das drehende magnetische Feld werden in dem leitfähigen Käfig Wechselströme induziert. Durch die Interaktion des rotierenden magnetischen Feldes des Stators und des im Rotor induzierten magnetischen Feldes entsteht ein Drehmoment.

Beispiele für Asynchronmaschinen, die teilweise auch als Induktionsmotor bezeichnet werden, finden sich beispielsweise in der WO 2014/090440 A2, in der US 2015/381099 A1, in der US 4409507 A, US 2014/319957 A1 in der CN 102 332 760 A oder in der US 2010/026008 A1.

Zum Betreiben von Asynchronmaschinen werden Inverter, auch Umrichter oder Pulswechselrichter genannt, verwendet, die Phasenströme für die Asynchronmaschine bereitstellen. Die Leistung der Inverter ist zum einen durch die maximale Sperrspannung der Leistungshalbleiter und zum anderen durch die maximal zulässigen Ströme der Leistungshalbleiter begrenzt. Damit ist die Stromtragfähigkeit der Leitermodule der limitierende Faktor für die übertragbare Leistung. Eine Steigerung der Leistung ist durch Verwendung mehrerer Module möglich, was sich beispielsweise durch eine Erhöhung der Phasenzahl gegenüber dreiphasigen Invertern und Motorvarianten realisieren lässt. Das grundlegende Design des Inverters bleibt dabei erhalten es ändert sich im Wesentlichen die Anzahl der Halbleitermodule. Beispielsweise kann die Leistung bei der Erhöhung einer dreiphasigen Designvariante auf eine sechsphasige Designvariante der Asynchronmaschine theoretisch verdoppelt werden. Bei der Erhöhung der Phasenzahl müssen im Hinblick auf die Optimierung der Leistung, der thermischen Eigenschaften, der Geräuschentwicklung und der Drehmomentwelligkeit der Asynchronmaschine neue Maschinentopologien entwickelt werden.

### Offenbarung der Erfindung

Erfindungsgemäß wird eine Asynchronmaschine, insbesondere für die Verwendung in Elektrofahrzeugen oder Hybridfahrzeugen, vorgeschlagen. Die Asynchronmaschine umfasst einen Rotor und einen den Rotor umgebenden Stator, wobei an dem Stator ein außenliegendes Statorjoch mit einer Statorjochhöhe ausgebildet ist und an dem Statorjoch eine Vielzahl radial nach innen abragender Statorzähne gleicher Länge ausgebildet sind, wobei zwischen benachbarten Statorzähnen jeweils eine Statornut ausgebildet ist, wobei an dem Rotor ein innenliegendes Rotorjoch ausgebildet ist und von dem Rotorjoch eine Vielzahl radial nach außen abragender Rotorzähne gleicher Länge ausgebildet sind, wobei zwischen benachbarten Rotorzähnen jeweils eine Rotornut ausgebildet ist. Die Asynchronmaschine ist sechsphasig ausgeführt. Erfindungsgemäß beträgt eine Statornutgesamtzahl, die die Gesamtanzahl der an dem Stator ausgebildeten Statornuten bezeichnet, zweiundsiebzig.

### Vorteile der Erfindung

Gegenüber dem Stand der Technik weist die Asynchronmaschine mit den Merkmalen des unabhängigen Anspruchs den Vorteil auf, dass sie durch die Kombination aus sechsphasiger Ausführung der Asynchronmaschine und einer Statornutgesamtzahl von zweiundsiebzig eine vorteilhaft hohe Leistung und ein vorteilhaft hohes Drehmoment besitzt.

Weitere vorteilhafte Ausgestaltungen und Weiterbildungen der Erfindungen werden durch die in den Unteransprüchen angegebenen Merkmale ermöglicht.

Erfindungsgemäß beträgt der Quotient aus der Statorjochhöhe und einer Statorlochzahl zwischen 3,5 Millimeter und 4,5 Millimeter, wobei die Statorlochzahl die Anzahl an Statornuten je Pol und Phase der Asynchronmaschine bezeichnet. Durch diese vorteilhaften Größenverhältnisse wird das Drehmoment und die Leistung der Asynchronmaschine vorteilhaft vergrößert.

Beträgt der Quotient aus der Statorjochhöhe und einer Rotorlochzahl zwischen 4,0 Millimeter und 5,0 Millimeter, wobei die Rotorlochzahl die Anzahl an Rotornuten je Pol und Phase der Asynchronmaschine bezeichnet, so ergibt sich eine besonders vorteilhafte Geometrie, durch die das Drehmoment und Leistung der Asynchronmaschine weiter vergrößert wird.

Besonders vorteilhaft beträgt der Quotient aus der Statorjochhöhe und dem Produkt aus Statorlochzahl und einer mittleren Breite des Statorzahns zwischen 0,8 und 1,2, insbesondere zwischen 0,9 und 1,1. Dies hat den Vorteil, dass sich eine derartig gestaltete Asynchronmaschine durch besonders hohe Leistung und ein besonders hohes Drehmoment auszeichnet.

Es erweist sich darüber hinaus als besonders vorteilhaft, wenn der Quotient aus der Statorjochhöhe und dem Produkt aus Rotorlochzahl und einer mittleren Breite des Rotorzahns zwischen 0,8 und 1,2, insbesondere zwischen 0,9 und 1,1 beträgt. Dies führt vorteilhaft zu einer weiteren Erhöhung der Leistung des Drehmoments der Asynchronmaschine.

Vorteilhaft umfasst die sechsphasige Asynchronmaschine zwei Dreiphasensysteme, die elektrisch um dreißig Grad gegeneinander phasenverschoben sind. Somit wird die Leistung und das Drehmoment der Asynchronmaschine weiter erhöht und das Sechsphasensystem kann vorteilhaft einfach aus zwei Dreiphasensystemen kombiniert werden.

In einem besonders vorteilhaften Ausführungsbeispiel beträgt eine Rotornutgesamtzahl zweiundfünfzig bis achtundfünfzig, insbesondere vierundfünfzig. Eine solche Rotornutgesamtzahl vermindert vorteilhaft parasitäre Effekte wie beispielsweise elektromagnetisch angeregte Geräusche oder elektromagnetisch angeregte Drehmomentschwankungen.

Es erweist sich als besonders vorteilhaft, wenn die Asynchronmaschine eine Polpaarzahl von drei aufweist. Eine derart ausgeführte Asynchronmaschine zeichnet sich durch vorteilhaft minimierte parasitäre Effekte wie beispielsweise elektromagnetisch angeregte Geräusche oder elektromagnetisch angeregte Drehmomentschwankungen aus. Des Weiteren kann der Stator durch eine Polpaarzahl von drei im Vergleich zu einer Asynchronmaschine mit geringerer Polpaarzahl aufgrund geringerer Jochsättigung innerhalb des Statorjochs vorteilhaft kleiner dimensioniert werden wodurch auch das Gesamtgewicht der Asynchronmaschine vorteilhaft reduziert werden kann und auch eine vorteilhaft höhere Gesamtdrehzahl erreicht werden kann.

In einem besonders vorteilhaften Ausführungsbeispiel beträgt ein Außendurchmesser des Stators zwischen zweihundertzehn Millimeter und zweihundertdreißig Millimeter, insbesondere zwischen zweihundertfünfzehn Millimeter und zweihundertfünfundzwanzig Millimeter, vorzugsweise insbesondere zwischen zweihundertachtzehn Millimeter und zweihundertzweiundzwanzig Millimeter. Ein derart bemessener Außendurchmesser des Stators optimiert die elektrische Maschine vorteilhaft bezüglich Erhöhung des Drehmoments und Verringerung von parasitären Effekten wie elektromagnetisch angeregte Gehäuse oder elektromagnetisch angeregte Drehmomentschwankungen.

### Kurze Beschreibung der Zeichnungen

Ein Ausführungsbeispiel der Erfindung ist in der Zeichnung dargestellt und wird in der nachfolgenden Beschreibung näher erläutert. Es zeigen
Fig. 1 eine schematische Darstellung eines Ausführungsbeispiels der erfindungsgemäßen Asynchronmaschine,
Fig. 2 einen schematischen Querschnitt durch das Ausführungsbeispiel der erfindungsgemäßen Asynchronmaschine,
Fig. 3 einen vergrößerten schematischen Querschnitt durch das Ausführungsbeispiel der erfindungsgemäßen Asynchronmaschine,
Fig. 4 einen weiter vergrößerten schematischen Querschnitt durch das Ausführungsbeispiel der erfindungsgemäßen Asynchronmaschine,
Fig. 5 einen Ausschnitt aus einem schematischen Zonenplan der Wicklungsstränge des Ausführungsbeispiels der erfindungsgemäßen Asynchronmaschine.

### Ausführungsformen der Erfindung

Die erfindungsgemäße Asynchronmaschine kann vielfältige Anwendung finden, beispielsweise kann sie für die Verwendung in Elektrofahrzeugen oder Hybridfahrzeugen vorgesehen sein, wo sie beispielsweise in Verbindung mit auch als Umrichter oder PulsWechselrichter bezeichneten Invertern im Motor- oder Generatorbetrieb betrieben werden kann.

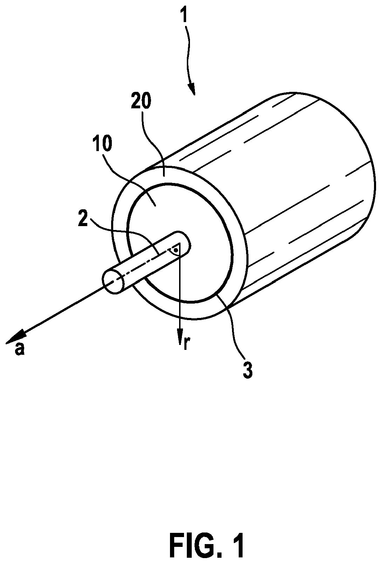

Fig. 1 zeigt eine schematische Darstellung eines ersten Ausführungsbeispiels der erfindungsgemäßen Asynchronmaschine 1. Die Asynchronmaschine 1 umfasst einen Rotor 10 und einen den Rotor 10 umgebenden Stator 20. Der Rotor 10 ist somit innerhalb des Stators 20 angeordnet und beispielsweise um eine Achse 2 drehbar. Der Rotor 10 und der Stator 20 weisen beispielsweise eine im Wesentlichen zylindrische Form auf. In diesem Ausführungsbeispiel ist zwischen dem Stator 20 und dem Rotor 10 ein Spalt 3 ausgebildet, so dass sich der Rotor 10 und der Stator 20 bei Rotation des Rotors 10 nicht berühren. In Fig. 1 ist weiterhin eine axiale Richtung a dargestellt, die anhand eines Richtungspfeils dargestellt ist, der einer Achse entspricht, um die sich der Rotor 10 bei Betrieb der Asynchronmaschine 1 dreht. Des Weiteren ist in Fig. 1 eine radiale Richtung r dargestellt, die senkrecht zu der axialen Richtung a steht.

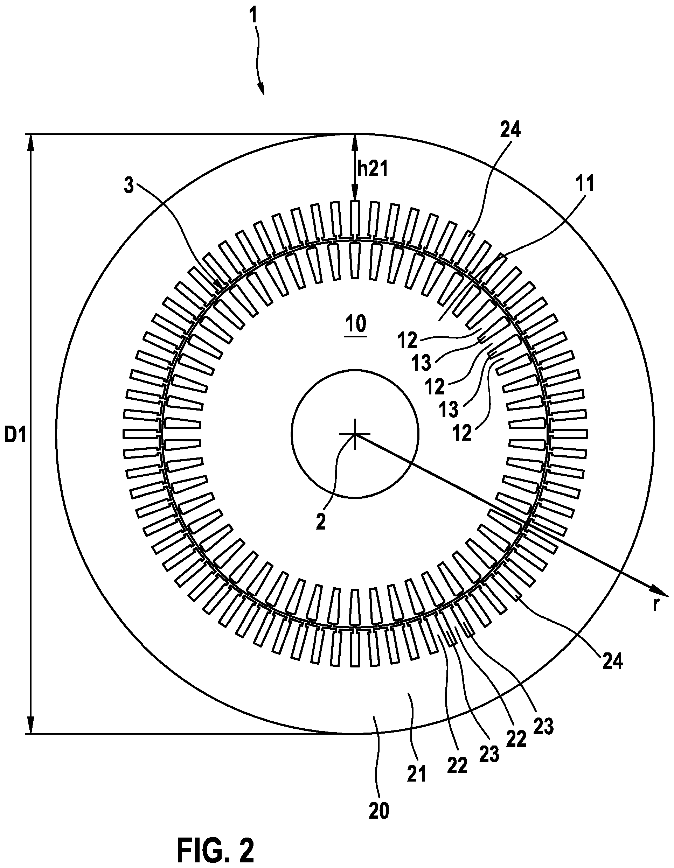

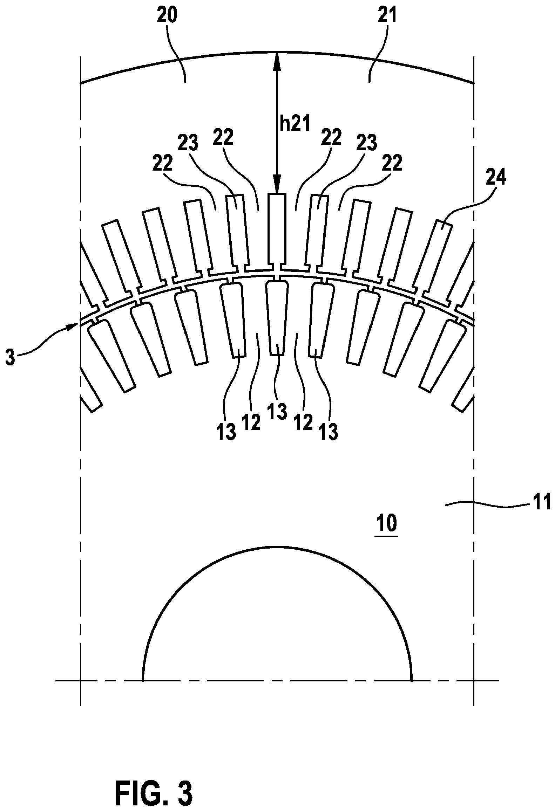

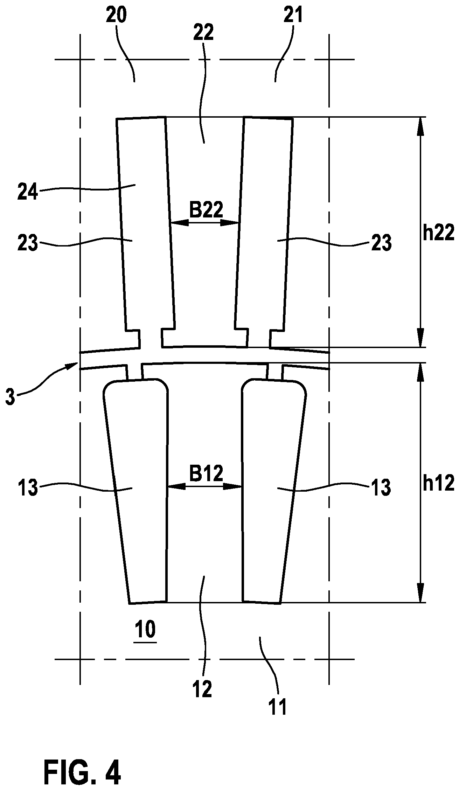

Fig. 2 zeigt einen schematischen Querschnitt durch das Ausführungsbeispiel der Asynchronmaschine 1 in einer Ebene senkrecht zur axialen Richtung a der Asynchronmaschine 1 durch den Rotor 10 und den Stator 20 der Asynchronmaschine 1. Fig. 3 und Fig. 4 zeigen vergrößerte Ausschnitte des Querschnitts aus Fig. 2.

Der Stator 20 weist ein in radialer Richtung r außenliegendes Statorjoch 21 auf. Das Statorjoch 21 ist beispielsweise zylinderförmig ausgebildet und in dem in Fig. 2 dargestellten Querschnitt somit ringförmig dargestellt. Die Abmessung des Statorjochs 21 in radialer Richtung r wird als Statorjochhöhe h21 bezeichnet. Weiterhin weist der Stator 20 eine Vielzahl von Statorzähnen 22 auf. Die Statorzähne 22 sind an dem Statorjoch 21 ausgebildet und ragen von dem Statorjoch 21 radial nach innen ab. Die Statorzähne 22 weisen beispielsweise alle die gleiche Länge auf und weisen in diesem Ausführungsbeispiel auch gleiche Form und gleiche Abmessungen auf und sind auch symmetrisch ausgebildet. Zwischen benachbarten Statorzähnen 22 ist jeweils eine Statornut 23 ausgebildet. In diesem Ausführungsbeispiel weisen auch alle Statornuten 23 eine gleiche Form und gleiche Abmessungen auf. Jeder Statorzahn 22 weist eine mittlere Breite B22 auf (Fig.4). Die mittlere Breite B22 bezeichnet die Breite eines Statorzahns 22 senkrecht zur radialen Richtung r auf halber Höhe h22 des Statorzahns 22 (Fig.4). In diesem Ausführungsbeispiel weisen beispielsweise alle an dem Stator 20 ausgebildeten Statorzähne 22 die gleiche mittlere Breite B22 auf. Das Statorjoch 21 umläuft die Statorzähne 22 und die Statornuten 23 in Umfangsrichtung. Die Gesamtzahl der an dem Stator 20 ausgebildeten Statornuten 23 wird durch eine Statornutgesamtzahl N1 bezeichnet. Die Statornutgesamtzahl N1 des Stators 20 der Asynchronmaschine 1 dieses Ausführungsbeispiels beträgt zweiundsiebzig. Entsprechend beträgt in diesem Ausführungsbeispiel auch die Anzahl der die Statornuten 23 begrenzenden Statorzähne 22, zweiundsiebzig.

Um jeden der Statorzähne 22 ist eine Vielzahl an Statorspulenelementen 24 angeordnet. Die Statorspulenelemente 24 sind beispielsweise aus Kupfer gefertigt, können aber auch aus anderen elektrisch gut leitenden Materialien, wie beispielsweise Aluminium gefertigt sein und bilden Wicklungsstränge. Durch den durch die Wicklungsstränge geführten Strom wird das sich drehende Magnetfeld erzeugt.

Der Stator 20 kann beispielsweise eine Vielzahl an in der axialen Richtung a übereinander gestapelten Blechlamellen umfassen. Die Blechlamellen können beispielsweise im Wesentlichen aus einem magnetisierbaren, vorzugsweise ferromagnetischen Material wie zum Beispiel Eisen bestehen und können gegeneinander elektrisch isoliert sein. Die einzelnen Lamellen können beispielsweise gestanzt sein und die zwischen benachbarten Statorzähnen 22 ausgebildeten Statornuten 23 können beispielsweise als Ausstanzungen in den Lamellen ausgebildet sein. Der Stator 20 weist einen Außendurchmesser D1 auf. Der Außendurchmesser D1 beträgt in diesem Ausführungsbeispiel zweihundertzwanzig Millimeter.

Die Asynchronmaschine 1 ist sechsphasig ausgeführt. In diesem Ausführungsbeispiel umfasst die sechsphasig ausgeführte Asynchronmaschine 1 zwei Dreiphasensysteme, die elektrisch um dreißig Grad gegeneinander phasenverschoben sind.

Die Asynchronmaschine 1 ist in diesem Ausführungsbeispiel derart ausgebildet und angesteuert, dass sie eine Polpaarzahl p von 3 aufweist. Die Polpaarzahl p ist die Anzahl der Paare von magnetischen Polen des rotierenden Gesamtmagnetfeldes innerhalb der Asynchronmaschine 1, wobei sich ein Paar von magnetischen Polen aus einem magnetischen Nordpol und einem magnetischen Südpol zusammensetzt. Bei einer minimalen Polpaarzahl p von eins weist die Asynchronmaschine 1 lediglich ein Polpaar, also einen magnetischen Nordpol und einen magnetischen Südpol auf. Bei einer Umpolung des vom Stator 20 bewirkten Magnetfeldes dreht sich der Rotor um einhundertachzig Grad. In dem hier dargestellten Ausführungsbeispiel der Asynchronmaschine 1 beträgt die Polpaarzahl p der Asynchronmaschine 1 drei. Entsprechend weist das rotierende Magnetfeld in diesem Ausführungsbeispiel drei Polpaare, also 3 magnetische Nordpole und 3 magnetische Südpole auf. Bei einer Umpolung des vom Stator 20 bewirkten rotierenden Magnetfeldes dreht sich in diesem Ausführungsbeispiel der Rotor 10 also um sechzig Grad. Hierzu werden jeweils mehrere der beispielsweise parallel zu der Achse 2 verlaufenden und in den Statornuten 23 angeordneten Statorspulenelemente 25 in gleicher und/oder entgegengesetzter Richtung bestromt. Das von den Statorspulenelementen 24 erzeugte Magnetfeld wird hauptsächlich in dem Statorjoch 21 und den Statorzähnen 22 gebündelt und von dem Stator 20 dann auf den Rotor 10 insbesondere auf dessen Rotorzähne 12 und dessen Rotorjoch 11 übertragen.

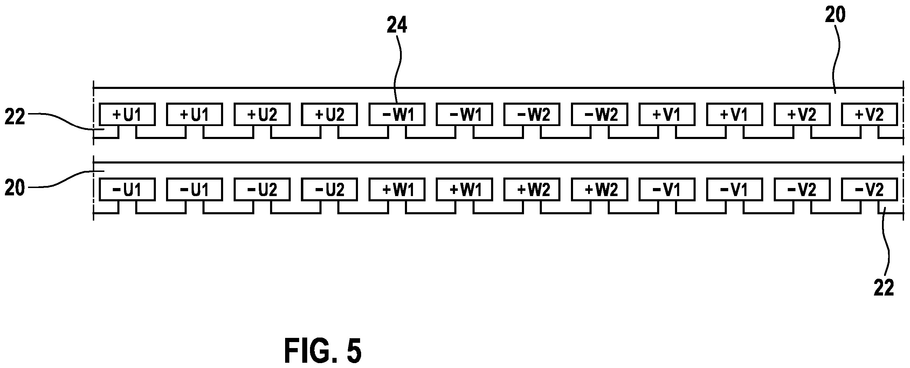

Fig. 5 zeigt einen schematischen Zonenplan der die Statorspulenelemente 24 bildenden Wicklungsstränge der einer sechsphasigen Wicklung mit zwei Dreiphasensystemen. Dieser Zonenplan kann sich beispielsweise auch mehrmals wiederholen. In diesem Ausführungsbeispiel der Asynchronmaschine 1 mit einer Polpaarzahl p von drei und einer Statornutgesamtzahl N1 von zweiundsiebzig ist der in Fig. 4 dargestellte Zonenplan den Stator 20 umlaufend beispielsweise dreimal hintereinander angeordnet. Somit bildet der in Fig. 5 dargestellte schematische Zonenplan der Wicklungsstränge in diesem Ausführungsbeispiel der Asynchronmaschine 1 einen Winkel von einhundertzwanzig Grad des Stators 20. U1, W1, V1 bezeichnen die Wicklungsstränge eines ersten 3 Phasensystems, U2, W2, V3 bezeichnen die Wicklungsstränge eines zweiten Dreiphasensystems. Die Wicklungsstränge sind beispielsweise zumindest teilweiset in den Statornuten 23 zwischen den Statorzähnen 22 des Stators 20 angeordnet. Die Vorzeichen + und - bezeichnen die Richtung, in der ein Wicklungsstrang von Strom durchflossen wird, wobei + und - entgegensetzte Richtungen angeben. Die Wicklungsstränge U1, W1, V1 werden beispielsweise von einem mit der Asynchronmaschine 1 verbundenem und den Figuren nicht dargestellten ersten Inverter angesteuert und bilden somit das erste Dreiphasensystem. Die Wicklungsstränge U2, W2, V3 werden beispielsweise von einem mit der Asynchronmaschine 1 verbundenem und den Figuren nicht dargestellten zweiten Inverter angesteuert und bilden somit das zweite Dreiphasensystem. Durch entsprechende Ansteuerung der jeweils drei Inverterphasen des ersten Inverters und des zweiten Inverters werden die drei Grundschwingungen des ersten Dreiphasensystems und die zweiten drei Grundschwingungen des zweiten Dreiphasensystems beispielsweise jeweils als symmetrisches Dreiphasensystem betrieben, so dass die einzelnen Phasen eines Dreiphasensystems gegeneinander beispielsweise um einhundertzwanzig Grad elektrisch phasenverschoben sind. Die zwei Dreiphasensysteme sind in diesem Ausführungsbeispiel um dreißig Grad elektrisch gegeneinander phasenverschoben und bilden zusammen ein Sechsphasensystem. In diesem Ausführungsbeispiel ist U2 gegenüber U1 um dreißig Grad elektrisch phasenverschoben, W2 ist gegenüber W1 um dreißig Grad elektrisch phasenverschoben und V2 ist gegenüber V1 um dreißig Grad elektrisch phasenverschoben. Räumlich sind in diesem Ausführungsbeispiel die jeweils zueinander gehörigen Wicklungsstränge der beiden Dreiphasensysteme räumlich zehn Grad zueinander versetzt angeordnet. Somit ist beispielsweise ein Wicklungsstrang U1 gegenüber einem Wicklungsstrang U2 räumlich um zehn Grad versetzt angeordnet.

In der vorliegenden Anmeldung bezeichnet eine Statorlochzahl q1 die Anzahl an Statornuten 23 je Pol und Phase der Asynchronmaschine 1. Die Anzahl der Pole entspricht dabei der doppelten Polpaarzahl p. In diesem Ausführungsbeispiel der Asynchronmaschine 1 beträgt die Polpaarzahl p drei und damit die Anzahl an Polen sechs. Mit einer Anzahl an Phasen von sechs und einer Statornutgesamtzahl N1 von zweiundsiebzig ergibt sich somit für diese Ausführungsbeispiel der Asynchronmaschine 1 eine Statorlochzahl q1 von zwei. Erfindungsgemäß beträgt der Quotient aus der Statorjochhöhe h21 und der Statorlochzahl q1 zwischen 3,5 Millimeter und 4,5 Millimeter. Des Weiteren beträgt der Quotient aus der Statorjochhöhe h21 und dem Produkt aus der Statorlochzahl q1 und der mittleren Breite B22 des Statorzahns 22 in diesem Ausführungsbeispiel zwischen 0,8 und 1,2. In der vorliegenden Anmeldung sind alle Abmessungen wie beispielsweise die Statorjochhöhe h21, die mittlere Breite B12 des Rotorzahns 12, die mittlere Breite B22 des Statorzahns 22 oder auch der Außendurchmesser D1 des Stators 20 in Millimetern gemessen und angegeben und die aus den Abmessungen berechneten Größen und Verhältnisse aus den Werten der Abmessungen in Millimeter berechnet.

Im Inneren des Stators 20 ist der Rotor 10 angeordnet, der relativ zum Stator 20 um die Achse 2 drehbar gelagert ist. Wie auch der Stator 20 kann der Rotor 10 beispielsweise eine Vielzahl an in der axialen Richtung a übereinander gestapelten Blechlamellen umfassen. Des Weiteren kann der Rotor 10 zumindest teilweise in den Rotornuten 13 angeordnete elektrisch leitfähige Stäbe umfassen, die durch zwei in den Figuren nicht dargestellte Kurzschlussringe an ihren Enden elektrisch leitend miteinander verbunden sind. Wie in Fig. 1, Fig. 2 und Fig. 3 dargestellt ist an dem Rotor 10 ein innenliegendes Rotorjoch 11 ausgebildet. Das Rotorjoch 11 ist beispielsweise zylinderförmig und in dem in Fig. 1 dargestellten Querschnitt senkrecht zur axialen Richtung somit ringförmig dargestellt. An dem Rotorjoch 11 ist eine Vielzahl radial nach außen abragender Rotorzähne 12 ausgebildet. Die Rotorzähne 12 haben in diesem Ausführungsbeispiel gleiche Länge und zwischen benachbarten Rotorzähnen 12 ist in diesem Ausführungsbeispiel jeweils eine Rotornut 13 ausgebildet. Ein Rotorzahn 12 weist eine mittlere Breite B12 auf. Die mittlere Breite B12 bezeichnet die Breite eines Rotorzahns 12 senkrecht zur radialen Richtung r auf halber Höhe h12 des Rotorzahns 12 (Fig.4).

Die Gesamtzahl der an dem Rotor 10 ausgebildeten Rotornuten 13 wird durch eine Rotornutgesamtzahl N2 bezeichnet. In diesem Ausführungsbeispiel beträgt die Rotornutgesamtzahl N2 vierundfünfzig. Die Rotorlochzahl q2 bezeichnet in der vorliegenden Anmeldung die Anzahl der Rotornuten 13 je Pol und Phase der Asynchronmaschine 1. Die Anzahl der Pole entspricht dabei der doppelten Polpaarzahl p. In diesem Ausführungsbeispiel der Asynchronmaschine 1 beträgt die Polpaarzahl p drei und damit die Anzahl an Polen sechs. Mit einer Anzahl an Phasen von sechs und einer Rotornutgesamtzahl N2 von vierundfünfzig ergibt sich somit für dieses Ausführungsbeispiel der Asynchronmaschine 1 eine Rotorlochzahl q2 von 1,5. In diesem Ausführungsbeispiel beträgt der Quotient aus Statorjochhöhe h21 und Rotorlochzahl q2 zwischen 4,0 Millimeter und 5,0 Millimeter.

Weiterhin beträgt der Quotient aus der Statorjochhöhe h21 und dem Produkt aus der Rotorlochzahl q2 und der mittleren Breite B12 des Rotorzahns 12 in diesem Ausführungsbeispiel zwischen 0,8 und 1,2, insbesondere zwischen 0,9 und 1,1. In der vorliegenden Anmeldung sind alle Abmessungen wie beispielsweise die Statorjochhöhe h21, die mittlere Breite B12 des Rotorzahns 12, die mittlere Breite B22 des Statorzahns 22 oder auch der Außendurchmesser D1 des Stators 20 in Millimetern gemessen und angegeben und die aus den Abmessungen berechneten Größen und Verhältnisse aus den Werten der Abmessungen in Millimeter berechnet.

Selbstverständlich sind auch weitere Ausführungsbeispiele und Mischformen der dargestellten Ausführungsbeispiele möglich.

## Patentansprüche

1. Asynchronmaschine (1), insbesondere für die Verwendung in Elektrofahrzeugen oder Hybridfahrzeugen, umfassend einen Rotor (10) und einen den Rotor (10) umgebenden Stator (20), wobei an dem Stator (20) ein außenliegendes Statorjoch (21) mit einer Statorjochhöhe (h21) ausgebildet ist, wobei die Statorjochhöhe (h21) die Abmessung des Statorjochs (21) in radialer Richtung (r) ist, und an dem Statorjoch (21) eine Vielzahl radial nach innen abragender Statorzähne (22) gleicher Länge ausgebildet sind, wobei zwischen benachbarten Statorzähnen (22) jeweils eine Statornut (23) ausgebildet ist,
wobei an dem Rotor (10) ein innenliegendes Rotorjoch (11) ausgebildet ist und von dem Rotorjoch (11) eine Vielzahl radial nach außen abragender Rotorzähne (12) gleicher Länge ausgebildet sind, wobei zwischen benachbarten Rotorzähnen (12) jeweils eine Rotornut (13) ausgebildet ist, wobei die Asynchronmaschine sechsphasig ausgeführt ist,
**wobei** eine Statornutgesamtzahl (N1), die die Gesamtanzahl der an dem Stator (20) ausgebildeten Statornuten (23) bezeichnet, zweiundsiebzig beträgt, **dadurch gekennzeichnet, dass** der Quotient aus der Statorjochhöhe (h21) und einer Statorlochzahl (q1) zwischen 3,5 Millimeter und 4,5 Millimeter beträgt, wobei die Statorlochzahl (q1) die Anzahl an Statornuten (23) je Pol und Phase der Asynchronmaschine (1) bezeichnet.

2. Asynchronmaschine nach Anspruch 1, **dadurch gekennzeichnet, dass** der Quotient aus der Statorjochhöhe (h21) und einer Rotorlochzahl (q2) zwischen 4,0 Millimeter und 5,0 Millimeter beträgt, wobei die Rotorlochzahl (q2) die Anzahl an Rotornuten (13) je Pol und Phase der Asynchronmaschine (1) bezeichnet.

3. Asynchronmaschine nach einem der vorhergehenden Ansprüche, **dadurch gekennzeichnet, dass** der Quotient aus der Statorjochhöhe (h21) und dem Produkt aus Statorlochzahl (q1) und einer mittleren Breite (B22) des Statorzahns (22) zwischen 0,8 und 1,2, insbesondere zwischen 0,9 und 1,1 beträgt.

4. Asynchronmaschine nach einem der vorhergehenden Ansprüche, **dadurch gekennzeichnet, dass** der Quotient aus der Statorjochhöhe (h21) und dem Produkt aus Rotorlochzahl (q2) und einer mittleren Breite (B12) des Rotorzahns (12) zwischen 0,8 und 1,2, insbesondere zwischen 0,9 und 1,1 beträgt.

5. Asynchronmaschine nach einem der vorhergehenden Ansprüche, **dadurch gekennzeichnet, dass** die sechsphasige Asynchronmaschine (1) zwei Dreiphasensysteme umfasst, die um dreißig Grad gegeneinander phasenverschoben sind.

6. Asynchronmaschine nach einem der vorhergehenden Ansprüche, **dadurch gekennzeichnet, dass** eine Rotornutgesamtzahl (N2) zweiundfünfzig bis achtundfünfzig, insbesondere vierundfünfzig beträgt.

7. Asynchronmaschine nach Anspruch 6, **dadurch gekennzeichnet, dass** die Asynchronmaschine (1) eine Polpaarzahl p von drei aufweist.

8. Asynchronmaschine nach einem der vorhergehenden Ansprüche, **dadurch gekennzeichnet, dass** ein Außendurchmesser (D1) des Stators (20) zwischen zweihundertzehn Millimetern und zweihundertdreißig Millimetern, insbesondere zwischen zweihundertfünfzehn Millimetern und zweihundertfünfundzwanzig Millimetern, vorzugsweise insbesondere zwischen zweihundertachtzehn Millimetern und zweihundertzweiundzwanzig Millimeter beträgt.

## Claims

1. Asynchronous machine (1), in particular for the use in electric vehicles or hybrid vehicles, comprising a rotor (10) and a stator (20) that surrounds the rotor (10),
wherein an external stator yoke (21) having a stator yoke height (h21) is configured on the stator (20), wherein the stator yoke height (h21) is the dimension of the stator yoke (21) in the radial direction (r), and a multiplicity of radially inward-protruding stator teeth (22) of identical length are configured on the stator yoke (21), wherein one stator groove (23) is in each case configured between neighbouring stator teeth (22), wherein an internal rotor yoke (11) is configured on the rotor (10), and a multiplicity of rotor teeth (12) of identical length that protrude radially outward from the rotor yoke (11) are configured, wherein one rotor groove (13) is in each case configured between neighbouring rotor teeth (12), wherein the asynchronous machine is embodied with six phases;
wherein a stator groove total number (N1) which refers to the total number of stator grooves (23) configured on the stator (20) is seventy-two, **characterized in that** the quotient of the stator yoke height (h21) and a stator hole number (q1) is between 3.5 millimetres and 4.5 millimetres, wherein the stator hole number (q1) refers to the number of stator grooves (23) per pole and phase of the asynchronous machine (1).

2. Asynchronous machine according to Claim 1, **characterized in that** the quotient of the stator yoke height (h21) and a rotor hole number (q2) is between 4.0 millimetres and 5.0 millimetres, wherein the rotor hole number (q2) refers to the number of rotor grooves (13) per pole and phase of the asynchronous machine (1).

3. Asynchronous machine according to either of the preceding claims, **characterized in that** the quotient of the stator yoke height (h21) and the product of the stator hole number (q1) and a mean width (B22) of the stator tooth (22) is between 0.8 and 1.2, in particular between 0.9 and 1.1.

4. Asynchronous machine according to one of the preceding claims, **characterized in that** the quotient of the stator yoke height (h21) and the product of the rotor hole number (q2) and a mean width (B12) of the rotor tooth (12) is between 0.8 and 1.2, in particular between 0.9 and 1.1.

5. Asynchronous machine according to one of the preceding claims, **characterized in that** the six-phase asynchronous machine (1) comprises two three-phase systems which in relation to one another are out of phase by thirty degrees.

6. Asynchronous machine according to one of the preceding claims, **characterized in that** a rotor groove total number (N2) is fifty-two to fifty-eight, in particular fifty-four.

7. Asynchronous machine according to Claim 6, **characterized in that** the asynchronous machine (1) has a number of pole pairs p of three.

8. Asynchronous machine according to one of the preceding claims, **characterized in that** an external diameter (D1) of the stator (20) is between two hundred and ten millimetres and two hundred and thirty millimetres, in particular between two hundred and fifteen millimetres and two hundred and twenty-five millimetres, preferably particularly between two hundred and eighteen millimetres and two hundred and twenty-two millimetres.

## Revendications

1. Machine asynchrone (1), en particulier pour l'utilisation sur des véhicules électriques ou hybrides, comprenant un rotor (10) et un stator (20) entourant le rotor (10), une culasse de stator (21) d'une hauteur de culasse de stator (h21), située à l'extérieur, étant réalisée sur le stator (20), la hauteur de culasse de stator (h21) étant la dimension de la culasse de stator (21) dans la direction radiale (r), et sur la culasse de stator (21), une pluralité de dents de stator (22) de même longueur, faisant saillie radialement vers l'intérieur, est réalisée, respectivement une encoche de stator (23) étant réalisée entre des dents de stator (22) voisines,
dans laquelle, sur le rotor (10), une culasse de rotor (11) située à l'intérieur est réalisée, et une pluralité de dents de rotor (12) de même longueur, faisant radialement saillie vers l'extérieur à partir de la culasse de rotor (11), est réalisée, respectivement une encoche de rotor (13) étant réalisée entre des dents de rotor (12) voisines, la machine asynchrone étant une version hexaphasée,
un nombre total d'encoches de stator (N1) qui désigne le nombre total des encoches de stator (23) réalisées sur le stator (20) étant égal à soixante-douze,
**caractérisée en ce que** le quotient de la hauteur de culasse de stator (h21) et d'un nombre de trous de stator (q1) est compris entre 3,5 millimètres et 4,5 millimètres, le nombre de trous de stator (q1) désignant le nombre d'encoches de stator (23) par pôle et par phase de la machine asynchrone (1).

2. Machine asynchrone selon la revendication 1, **caractérisée en ce que** le quotient de la hauteur de culasse de stator (h21) et d'un nombre de trous de rotor (q2) est compris entre 4,0 millimètres et 5,0 millimètres, le nombre de trous de rotor (q2) désignant le nombre d'encoches de rotor (13) par pôle et par phase de la machine asynchrone (1).

3. Machine asynchrone selon l'une quelconque des revendications précédentes, **caractérisée en ce que** le quotient de la hauteur de culasse de stator (h21) et du produit du nombre de trous de stator (q1) et d'une largeur moyenne (B22) de la dent de stator (22) est compris entre 0,8 et 1,2, en particulier entre 0,9 et 1,1.

4. Machine asynchrone selon l'une quelconque des revendications précédentes, **caractérisée en ce que** le quotient de la hauteur de culasse de stator (h21) et du produit du nombre de trous de rotor (q2) et d'une largeur moyenne (B12) de la dent de rotor (12) est compris entre 0,8 et 1,2, en particulier entre 0,9 et 1,1.

5. Machine asynchrone selon l'une quelconque des revendications précédentes, **caractérisée en ce que** la machine asynchrone (1) hexaphasée comprend deux systèmes triphasées déphasés de trente degrés l'un par rapport à l'autre.

6. Machine asynchrone selon l'une quelconque des revendications précédentes, **caractérisée en ce qu'**un nombre total d'encoches de rotor (N2) est égal à cinquante-deux à cinquante-huit, en particulier à cinquante-quatre.

7. Machine asynchrone selon la revendication 6, **caractérisée en ce que** la machine asynchrone (1) présente un nombre de paires de pôles p égal à trois.

8. Machine asynchrone selon l'une quelconque des revendications précédentes, **caractérisée en ce qu'**un diamètre extérieur (D1) du stator (20) est compris entre deux cent dix millimètres et deux cent trente millimètres, en particulier entre deux cent quinze millimètres et deux cent vingt-cinq millimètres, de préférence en particulier entre deux cent dix-huit millimètres et deux cent vingt-deux millimètres.
